# EUROPÄISCHE PATENTSCHRIFT

(11) **EP 1 634 040 B1**
(45) Veröffentlichungstag und Bekanntmachung des Hinweises auf die Patenterteilung: **07.04.2010**
(21) Anmeldenummer: 04739604.9
(22) Anmeldetag: 04.06.2004
(51) Int. Cl.: G01D 13/22

(54) **LINEARZEIGER**
LINEAR INDICATOR
AIGUILLE INDICATRICE A MOUVEMENT LINEAIRE

(30) Priorität: 05.06.2003 DE 10325793
(43) Veröffentlichungstag der Anmeldung: 15.03.2006
(73) Patentinhaber: Johnson Controls Automotive Electronics GmbH, 75196 Remchingen (DE)
(72) Erfinder: ZIEGLER, Wolfgang, 76307 Karlsbad (DE); SALABASCHEW, Atanas, F-75016 Paris (FR)
(74) Vertreter: Hemmelmann, Klaus
(86) Internationale Anmeldenummer: PCT/EP2004/006050
(87) Internationale Veröffentlichungsnummer: WO 2004/109233

(56) Entgegenhaltungen:
- FR-A- 2 790 552
- US-A- 4 990 835
- US-A- 5 285 134

## Beschreibung

Die vorliegende Erfindung betrifft ein Analoganzeigeinstrument, insbesondere für den Einsatz in Armaturentafeln von Kraftfahrzeugen, wobei das Instrument einen vor einer Skala beweglichen Zeiger aufweist.

Derartige Zeigerinstrumente sind hinlänglich in einer großen Vielfalt bekannt. Bei den bekannten Instrumenten wird meistenteils ein Zeiger entlang eines Kreises oder eines Kreissegmentes bewegt, wobei der Zeiger am Kopf einer von einem Schrittmotor angetrieben Welle gehalten ist. Die Bewegung des Zeigers ist daher auf eine entsprechende Kreisbahn beschränkt. Diese erzwungene Kreisbewegung stellt bei der Konzeption derartiger Instrumente eine erhebliche Einschränkung der konstruktiven und gestalterischen Möglichkeiten dar. Gerade der Bauraum und die benötigte Fläche auf der Anzeigentafel sind verhältnismäßig groß, so dass einer Miniaturisierung der Instrumente bei Erhalt der Übersichtlichkeit Grenzen gesetzt sind. Zudem muss ein hoher konstruktiver Aufwand betrieben werden, sollen zum Zwecke der Platzersparnis mehrere mit Zeigern ausgestattete Anzeigen unter Überlappung ihrer Winkelbereiche angeordnet werden.

Neben diesen kreisförmigen Anzeigen sind aus dem Fahrzeugbereich Instrumente bekannt, deren Zeiger von einem sich in seiner Länge veränderndes Pfeil gebildet werden, die sich linear entlang einer Skala erstrecken. Diese Lösung hat sich wegen des hohen technischen Aufwandes der Verstellmimik und der damit verbundenen erhöhten Störanfälligkeit der Instrumente nicht durchsetzen können.

Als Alternative zu diesen Konzepten mit einem zentral positionierten Motor wurde bereits vorgeschlagen, die Antriebseinheit mit dem Zeiger zusammenzufassen und gemeinsam damit zu bewegen. In der Patentschrift FR 2 790 552 ist ein mit einem Antriebsmittel versehener Schlitten beschrieben, der einen Zeiger trägt und diesen Zeiger entlang einer geraden oder kreisbogenförmigen Führungsschiene vor einer Skala wahlweise vorwärts oder rückwärts bewegt. Die Führungsschiene ist zu diesem Zweck entweder mit einer Zahnstange ausgerüstet oder als ein Bestandteil eines Linearantriebs ausgebildet, indem sie einen Stator aufweist.

Die Aufgabe der Erfindung besteht darin, ein Anzeigeinstrument der vorstehend beschriebenen Art so weiterzubilden, dass die Führung, entlang welcher sich der Schlitten bewegt, möglichst einfach und möglichst klein in ihren Abmessungen aufgebaut sein kann, damit eine möglichst grosse gestalterische Freiheit bei der Konstruktion solcher Instrumente erreicht wird.

Die Aufgabe wird dadurch gelöst, daß als auf dem Schlitten aufsitzender Antrieb ein Linearantrieb in Form eines Piezomotors vorgesehen ist, welcher mit einem Antriebsteil kraftschlüssig an der Führung angreift. Diese Antriebsart weist - bei bereits fortgeschrittener Entwicklung - ein besonderes Potential zu einer weiteren Miniaturisierung auf. Damit bietet die Erfindung einen großen Spielraum für besonders ausgefallene Designmerkmale, die dem Stil des jeweiligen Fahrzeugtyps, in welchem sie zum Einsatz kommt, angepasst werden können.

Eine bevorzugte Variante der orstfesten Führung, entlang welcher der Schlitten sich bewegt (bzw. zwangsgeführt wird) ist ihre Ausgestaltung als Stab. Eine besonders einfache Ausbildung des Piezomotors, der als Linearantrieb nicht auf weitere Komponenten, wie etwa ein Getriebe, angewiesen ist, sitzt verschieblich auf dem Stab auf und bewegt sich mit Hilfe eines in elliptischen Bewegungen erregten Vibrationselementes, das Teil des Antriebselementes ist. Mit einem solchen Antrieb ist ein Verschieben des Schlittens in beliebiger Geschwindigkeit möglich.

Ein Problem bei den Linearantrieben, insbesondere bei den genannten Piezomotoren, ist, dass die zurückgelegte Wegstrecke nur innerhalb gewisser Grenzen reproduzierbar ist. Führt ein solcher Piezomotor eine bestimmte Anzahl von Schritten in die eine Richtung aus, so ist nicht gewährleisten, dass dieselbe Anzahl von Schritten in die andere Richtung genau zu demselben Ausgangspunkt führt. Aus diesem Grunde ist es vorteilhaft, eine von dem Piezomotor unabhängige Sensorik vorzusehen, mit der die aktuelle Stellung des Schlittens beobachtet werden kann. In einer vorteilhaften Ausführungsform der Erfindung ist somit die Zeigerstellung im Verhältnis zu der Führung und/oder im Verhältnis zu der Skala mit der Sensorik feststellbar. Die über die Sensorik gewonnenen Größen werden vorteilhafterweise zur Grundlage eines Regelprozesses gemacht.

Es sind unterschiedliche Ausführungsformen für eine solche Sensorik denkbar: Wegen des einfachen und kostengünstigen Aufbaus und wegen der Genauigkeit der bestimmten Größen, ist es vorteilhaft, mit dem den Zeiger tragenden Schlitten eine Spannungsteilerschaltung zu realisieren. Dazu wird vorteilhafterweise entlang des Stabes eine elektrisch leitende Spur mit möglichst homogenem Widerstand angebracht, auf der ein am Schlitten angebrachter Stromabnehmer aufliegt. Wird nun über eine Strecke der Spur, insbesondere zwischen der Ausgangsstellung (Nullstellung) und einer Maximalstellung des Schlittens, eine Maximalspannung angelegt, so kann über den Stromabnehmer eine Teilspannung abgegriffen werden. In einer besonders einfachen und robusten Ausführungsform ist der gesamte Stab aus leitendem Material mit definiertem Widerstand, insbesondere aus einem mit Kohlenstoff durchsetzten Kunststoff, gefertigt. Der Stab kann in einer anderen Variante auch von einer Wicklung umgeben sein, auf deren abisolierten Oberfläche der Stromabnehmer verschieblich ist.

Die Spannungsteilerschaltung wird vorteilhafterweise so realisiert, dass die Enden der vom Schlitten überfahrbaren Spur und der Abgriff des Stromabnehmers zu einer Messbrücke geschaltet werden. Auf die bekannte Weise lässt sich aus dem Verhältnis der Spannungen die Position des Stromabnehmers auf der Spur bestimmen. Aus der Position des Stromabnehmers ist die Ist-Stellung des Zeigers im Verhältnis zur Skala ermittelbar. Es ist dabei vorteilhaft, einen Regelkreis vorzusehen, der die Ist-Stellung des Zeigers einem Regler als Eingangsgröße vorgibt, die dieser zu einer vorgegebenen Soll-Stellung in Relation setzt, wobei der Regler dem Piezomotor die Regeldifferenz als Ausgangsgröße vorgibt. Die Soll-Stellung wird aus der gemessenen Größe, beispielsweise der gemessenen Geschwindigkeit, ermittelt.

Generell können die analogen Werte über einen Analog-Digital Wandler (ADC) konvertiert und in einem Mikroprozessor verarbeitet werden. Auf diese Weise lässt sich die Zeigerstellung zuverlässig berechnen, wobei sich die Genauigkeit der Berechnung über die Auflösung des eingesetzten ADC einstellen lässt.

Um die Positionierung des Piezomotors reproduzieren zu können, kann in einer einfachen Ausführungsform auch ein Abgleich von Soll- und Ist-Stellung über eine Schaltung zum Nullpunktsabgleich realisiert werden. Diese nimmt den Abgleich beispielsweise vor, wenn sich der Zeiger in seiner Ausgangsstellung befindet. Ein solcher Abgleich kann die Regelung ersetzen, aber auch ergänzend zur Regelung vorgesehen sein.

Es bietet sich an, als Stromabnehmer das kontaktierend an der Spur anliegende Vibrationselement zu nutzen. Mit dieser Vereinfachung lässt sich ein zusätzliches Bauteil vermeiden, was zur Erhöhung der Zuverlässigkeit des Instruments und zu einer Kostenersparnis beiträgt.

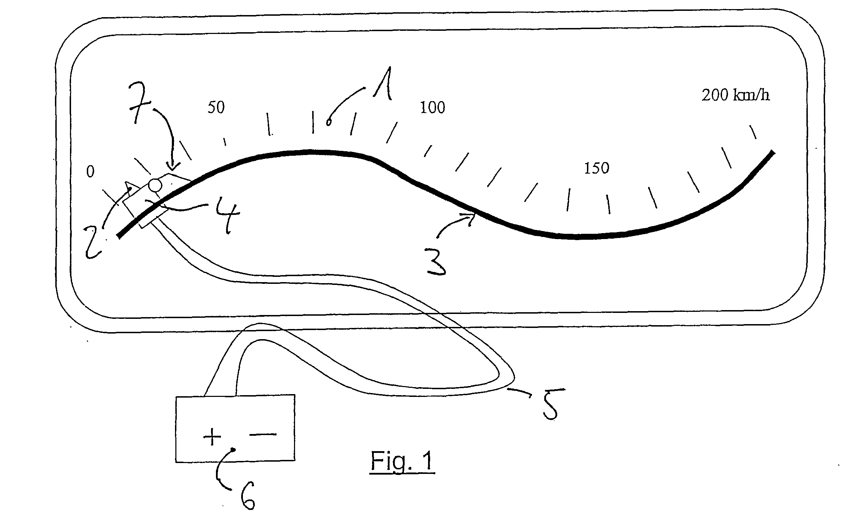

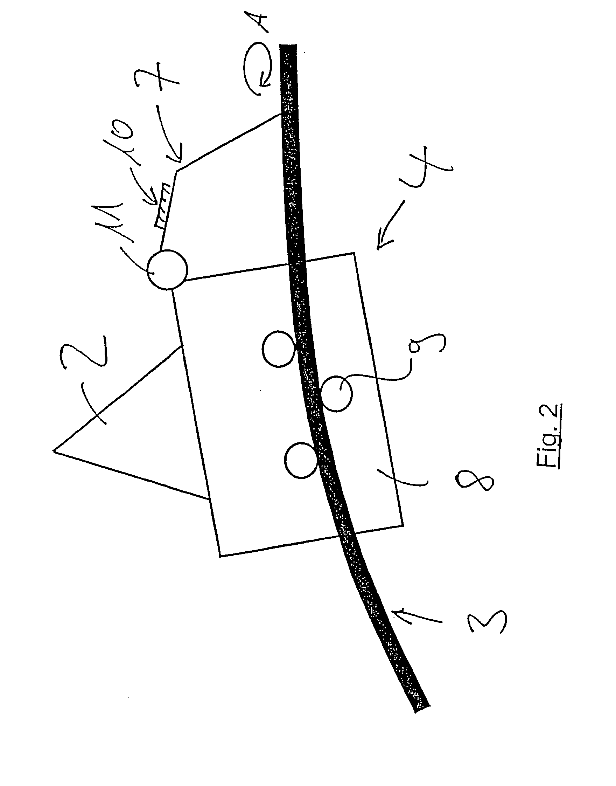

Eine besondere Ausführungsform der Erfindung ist in den Figuren 1 und 2 dargestellt und wird nachfolgend näher beschrieben. Es zeigen:
- **Figur 1**: ein erfindungsgemäßes Instrument in schematischer Darstellung und
- **Figur 2**: ein Detail des Instrumentes.

In Figur 1 ist ein Instrument zur Anzeige der Geschwindigkeit dargestellt, das in Armaturentafeln von Kraftfahrzeugen einsetzbar ist. Das Instrument weist einen vor einer Skala 1 beweglichen Zeiger 2 auf, der in bekannter Weise beleuchtbar ist. Das Instrument weist eine als Welle ausgebildete Führung 3 auf, wobei der Zeiger 2 entlang der Führung von einem elektrisch ansteuerbaren Antrieb 4 in Vorwärts- und Rückwärtsrichtung linear bewegbar ist. Der Antrieb 4 ist über dünne Drähte 5 mit einer Stromquelle 6 verbunden. Der Antrieb ist in diesem Falle ein Piezomotor, der sich entlang der ortsfesten und Führung 3 bewegt, wobei der Piezomotor mit einem Antriebsteil 7 kraftschlüssig an der Führung 3 angreift. In dieser Ausführungsform weist der Piezomotor einen Schlitten 8 auf, der mit Rollen 9 entlang der Führung 3 zwangsgeführt ist. Die Führung 3 wird von einem Stab aus mit Kohlenstoff durchsetztem Kunststoff gebildet, auf dem der Piezomotor aufsitzt, wobei der Piezomotor ein Antriebsteil mit Vibrationselement 7 aufweist, das an dem Stab 3 angreift und dessen Spitze zu elliptischen Bewegungen (Pfeil A) angeregt wird und sich damit an dem Stab 3 abstößt. Auf dem Vibrationselement 7 ist eine Piezokeramik 10 angebracht, die über eine angelegte Wechselspannung erregt wird. Das Vibrationselement 7 ist vermittels einer Feder 11 an dem Schlitten 8 gehalten.

## Patentansprüche

1. Analoganzeigeinstrument für den Einsatz in Armaturentafeln von Kraftfahrzeugen, wobei das Instrument einen vor einer Skala (1) beweglichen Zeiger (2) aufweist, wobei der Zeiger (2) entlang einer als Gerade oder Kurve ausgebildeten Führung (3) von einem elektrisch ansteuerbaren Antrieb (4) in Vorwärts- und Rückwärtsrichtung linear bewegbar ist, wobei der Zeiger (2) auf einem entlang der Führung (3) zwangsgeführten Schlitten (8) angeordnet ist, der unmittelbar von dem ebenfalls auf dem Schlitten (8) aufsitzenden Antrieb (4) bewegbar ist, wobei der Antrieb ein Linearantrieb ist, **dadurch gekennzeichnet,**
**dass** der Linearantrieb (4) ein Piezomotor ist, der sich entlang der ortsfesten Führung (3) bewegt, wobei der Piezomotor mit einem Antriebsteil (7) kraftschlüssig an der Führung (3) angreift.

2. Instrument nach Anspruch 1, **dadurch gekennzeichnet, dass** die Führung (3) ein Stab ist, auf dem der Piezomotor aufsitzt, wobei der Piezomotor ein Antriebsteil mit Vibrationselement (7) aufweist, das an dem Stab angreift und das sich durch elliptische Bewegungen an dem Stab abstößt.

3. Instrument nach Anspruch 1 oder 2, **dadurch gekennzeichnet, dass** die Stellung des Schlittens (8) oder des Zeigers (2) im Verhältnis zur Führung (3) und damit im Verhältnis zur Skala (1) mit einer Sensorik feststellbar ist.

4. Instrument nach Anspruch 3, **dadurch gekennzeichnet, dass** entlang der Führung (3) eine elektrisch leitende Spur mit homogenem Widerstand angebracht ist, auf der ein Stromabnehmer des Schlittens (8) aufliegt, wobei über die Länge der Spur zwischen einer Ausgangsstellung und einer Maximalstellung des Schlittens eine Maximalspannung anliegt und wobei über den Stromabnehmer eine Teilspannung abgreifbar ist.

5. Instrument nach Anspruch 4, **dadurch gekennzeichnet, dass** die Enden der Spur und der Abgriff durch den Stromabnehmer im Sinne einer Messbrücke geschaltet sind, aus der die Position des Stromabnehmers auf der Spur und damit die Ist-Stellung des Zeigers (2) im Verhältnis zur Skala (1) berechenbar ist.

6. Instrument nach Anspruch 4, **dadurch gekennzeichnet, dass** der Antrieb (4) ein Linearantrieb in Form eines Piezomotors ist, und dass die Führung (3) ein Stab ist, auf dem der Piezomotor aufsitzt, wobei der Piezomotor ein Antriebsteil mit Vibrationselement (7) aufweist, das an dem Stab kraftschlüssig angreift und das sich durch elliptische Bewegungen an dem Stab abstößt.

7. Instrument nach Anspruch 6, **dadurch gekennzeichnet, dass** die Tellspannung über das kontaktierend an der Spur anliegende Vibrationselement (7) abgenommen wird.

8. Instrument nach einem der vorherigen Ansprüche, **gekennzeichnet durch** einen Regelkreis, der die Ist-Stellung des Zeigers einem Regler als Eingangsgröße vorgibt, die dieser zu einer vorgegebenen Soll-Stellung in Relation setzt, wobei der Regler dem Piezomotor die Regeldifferenz als Ausgangsgröße vorgibt.

9. Instrument nach einem der vorherigen Ansprüche, **gekennzeichnet durch** eine Schaltung zum Nullpunktsabgleich, die einen Abgleich vornimmt, wenn sich der Zeiger (2) in seiner Ausgangsstellung befindet.

10. Instrument nach Anspruch 2 oder 6, **dadurch gekennzeichnet, dass** die Führung, insbesondere der Stab, aus einem leitenden Material, insbesondere aus einem mit Kohlenstoff versehenen Kunststoff gefertigt ist.

## Claims

1. Analog display instrument for use in motor-vehicle dashboards, with the instrument having an indicator (2) which moves in front of a scale (1), it being possible for the indicator (2) to be moved linearly along a guide (3), in the form of a straight line or a curve, in the forward and backward directions by an electrically controllable drive (4), the indicator (2) being arranged on a slide (8) which is positively guided along the guide (3) and can be moved directly by the drive (4) which is likewise seated on the slide (8), the drive (4) being a linear drive, **characterized in that** the linear drive (4) is a piezomotor which moves along the fixed guide (3), with a drive part (7) of the piezomotor engaging on the guide (3) in a non-positive manner.

2. Instrument according to Claim 1, **characterized in that** the guide (3) is a rod on which the piezomotor is seated, with the piezomotor having a drive part with a vibration element (7) which engages on the rod and pushes off from the rod on account of elliptical movements.

3. Instrument according to Claim 1 or 2, **characterized in that** the position of the slide (8) or of the indicator (2) in relation to the guide (3) and therefore in relation to the scale (1) can be established using a sensor system.

4. Instrument according to Claim 3, **characterized in that** an electrically conductive track with a homogeneous resistance is provided along the guide (3), on which track a current collector of the slide (8) rests, with a maximum voltage being applied over the length of the track between a starting position and a maximum position of the slide, and it being possible to tap off a partial voltage across the current collector.

5. Instrument according to Claim 4, **characterized in that** the ends of the track and the tap are connected by the current collector in the manner of a measuring bridge which can be used to calculate the position of the current collector on the track and therefore the actual position of the indicator (2) in relation to the scale (1).

6. Instrument according to Claim 4, **characterized in that** the drive (4) is a linear drive in the form of a piezomotor, and **in that** the guide (3) is a rod on which the piezomotor is seated, the piezomotor having a drive part with a vibration element (7) which engages in a non-positive manner on the rod and pushes off from the rod on account of elliptical movements.

7. Instrument according to Claim 6, **characterized in that** the partial voltage is tapped across the vibration element (7) which is in contact with the track.

8. Instrument according to one of the preceding claims, **characterized by** a control loop which forwards the actual position of the indicator to a controller as an input variable which said controller compares with a prespecified desired position, with the controller forwarding the control difference to the piezomotor as an output variable.

9. Instrument according to one of the preceding claims, **characterized by** a circuit for adjusting the zero point, which circuit performs an adjustment when the indicator (2) is in its starting position.

10. Instrument according to Claim 2 or 6,
**characterized in that** the guide, in particular the rod, is produced from a conductive material, in particular from a plastic provided with carbon.

## Revendications

1. Instrument indicateur analogique pour l'utilisation dans des tableaux de bord de véhicules automobiles, dans lequel l'instrument présente une aiguille indicatrice (2) déplaçable devant une échelle (1), l'aiguille indicatrice (2) pouvant être déplacée linéairement par un entraînement à commande électrique (4), vers l'avant et vers l'arrière le long d'un guide (3) réalisé sous forme de droite ou de courbe, l'aiguille indicatrice (2) étant disposée sur un chariot (8) guidé par force le long du guide (3), qui peut être déplacé directement par l'entraînement (4) reposant également sur le chariot (8), l'entraînement étant un entraînement linéaire, **caractérisé en ce que**
l'entraînement linéaire (4) est un moteur piézoélectrique qui se déplace le long du guide fixe (3), le moteur piézoélectrique venant en prise avec une partie d'entraînement (7) par engagement par force avec le guide (3).

2. Instrument selon la revendication 1, **caractérisé en ce que** le guide (3) est une barre, sur laquelle repose le moteur piézoélectrique, le moteur piézoélectrique présentant une partie d'entraînement avec un élément de vibration (7) qui vient en prise avec la barre et qui bute contre la barre par des mouvements elliptiques.

3. Instrument selon la revendication 1 ou 2, **caractérisé en ce que** la position du chariot (8) ou de l'aiguille indicatrice (2) par rapport au guide (3) et donc par rapport à l'échelle (1) peut être établie avec un système de capteurs.

4. Instrument selon la revendication 3, **caractérisé en ce qu'**une trace électriquement conductrice ayant une résistance homogène est montée le long du guide (3), sur laquelle repose un collecteur de courant du chariot (8), une tension maximale s'appliquant sur la longueur de la trace entre une position de départ et une position maximale du chariot, et une tension partielle pouvant être prélevée par le biais du collecteur de courant.

5. Instrument selon la revendication 4, **caractérisé en ce que** les extrémités de la trace et la prise par le collecteur de courant sont montées dans le sens d'un pont de mesure, à partir duquel la position du collecteur de courant sur la trace et donc la position instantanée de l'aiguille indicatrice (2) par rapport à l'échelle (1) peuvent être calculées.

6. Instrument selon la revendication 4, **caractérisé en ce que** l'entraînement (4) est un entraînement linéaire en forme de moteur piézoélectrique, et **en ce que** le guide (3) est une barre, sur laquelle repose le moteur piézoélectrique, le moteur piézoélectrique présentant une partie d'entraînement avec un élément de vibration (7), qui vient en prise sur la barre par engagement par force, et qui bute contre la barre par des mouvements elliptiques.

7. Instrument selon la revendication 6, **caractérisé en ce que** la tension partielle est reprise par l'élément de vibration (7) s'appliquant avec contact contre la trace.

8. Instrument selon l'une quelconque des revendications précédentes, **caractérisé par** un circuit de réglage, qui prédéfinit la position instantanée de l'aiguille indicatrice en tant que valeur d'entrée à un régulateur, qui la met en relation avec une position de consigne prédéfinie, le régulateur prédéfinissant la différence de régulation en tant que valeur de sortie pour le moteur piézoélectrique.

9. Instrument selon l'une quelconque des revendications précédentes, **caractérisé par** un réglage à zéro qui effectue un ajustement lorsque l'aiguille indicatrice (2) se trouve dans sa position de départ.

10. Instrument selon la revendication 2 ou 6,
**caractérisé en ce que** le guide, notamment la barre, se compose d'un matériau conducteur, en particulier d'un plastique renforcé de carbone.
